# EUROPEAN PATENT APPLICATION

(11) **EP 2 056 585 A2**
(43) Date of publication of application: **06.05.2009**
(21) Application number: 08018918.6
(22) Date of filing: 29.10.2008
(51) Int. Cl.: H04N 1/60

(54) **Image conversion apparatus, image conversion program storage medium, and image display system**

(30) Priority: 02.11.2007 JP 2007286463
(71) Applicant: Fujifilm Corporation, Tokyo 106-8620 (JP)
(72) Inventor: Osa, Hiroyuki, Tokyo 107-0052 (JP); Katoh, Masanori, Tokyo 107-0052 (JP)
(74) Representative: Höhfeld, Jochen

(57) **Abstract**

The image conversion apparatus includes: an image data acquiring section that acquires print image data for a print system, the print image data indicating a print image to be printed by the print system; a data conversion section that converts the print image data to display image data for a display system such that the print image is reproduced by the display system; a degree specification accepting section that accepts a specification operation that specifies a degree of visible color difference between the print image and a reproduced image, the degree of difference generated by a comparison environment that compares colors therebetween; and a conversion adjusting section that adjusts data conversion by the data conversion section based on a degree specified by the specification operation so that the color of the print image and the color of the reproduced image are seen as an identical color.

## Description

### BACKGROUND OF THE INVENTION

### 1. Field of the Invention

The present invention relates to an image conversion apparatus and an image conversion program storage medium for converting image data for a print system to image data for a display system.

### 2. Description of the Related Art

In a conventional printing field, images are editedusing a personal computer or the like, a film original plate is created based on the edit image, a press plate is created based on the film original plate, the press plate is loaded on a printing machine and coated with ink and then, the applied ink is transferred to print papers. Print images are created through such a sequential processing. In recent years, CTP (computer to plate) technique of imprinting an image directly onto the press plate is built into the printingmachine, so that a digital printing machine in which plate making process requiring an experienced skill is automated has been developed and such a printing machine has been demanded as a printing machine for printing diversified kinds of prints in small batches.

A series of works for printing sheets is a serious procedure for, for example, printing several hundreds sheets, which takes much time and cost. Therefore, generally before performing an actual printing work, a proof image is created to reproduce a target printed image with a handier printer than the printing machine and a finish of the print image is verified preliminarily using that proof image. Further, recently, soft proof which displays the proof image on a calibrated monitor has attracted attentions. The soft proof enables the print images to be verified easily on each step of the printing procedure and suppresses generation of waste papers efficiently.

However, the soft proof often gives an impression that colors of a proof image displayed on a screen do not agree with colors of a print image actually printed on a sheet even if a highly calibrated monitor is used.

As regards this point, Japanese Patent Application Publication No.2005-94400 has described a technique of generating a look-up table for the monitor, in which a white color (actually, color of a print sheet) on a print image generated by an output device and a white color displayed on the monitor are measured under identical illumination light so as to adjust those measured colors so that they agree with each other, based on an analysis indicating that the reason why the color of the proof image and the color of the print image do not agree with each other is that the white color of the print image and the white color of the proof image displayed on the monitor do not agree with each other.

However, white color on a print image or white color on the monitor are changed depending on a difference in the type of the monitor and print paper and observation place. Thus, it is practically impossible to prepare a lookup table meeting all conditions.

The reason why impressions on the color of the print image printed on a paper and the color of the proof image displayed on the monitor do not agree with each other is considered to be not only that the white colors of the print image and proof image do not agree with each other but also due to other various reasons such as a difference in reflection of light between the paper and monitor. For the reason, there is such a problem that a proof image in which colors of the print image are reproduced sufficiently cannot be displayed by the technique described in the Japanese Patent Application Publication No.2005-94400 alone.

### SUMMARY OF THE INVENTION

The present invention has been made in view of the above circumstances and provides an image conversion apparatus, an image conversion programs storage medium, and an image display system capable of displaying the proof image in which colors of the print image are reproduced at a high accuracy.

The image conversion apparatus according to the present invention includes: an image data acquiring section that acquires print image data for a print system, the print image data indicating a print image to be printed by the print system that prints an image based on image data; a data conversion section that converts the print image data to display image data for a display system such that the print image is reproduced by the display system that displays the image on a display screen based on the image data; a degree specification accepting section that accepts a specification operation that specifies a degree of visible color difference between colors of the print image and a reproduced image of the print image reproduced on the display screen, the degree of visible color difference generated by a comparison environment that compares the colors therebetween; and a conversion adjusting section that adjusts data conversion by the data conversion section based on a degree specified by the specification operation so that the color of the print image and the color of the reproduced image are seen as an identical color in the comparison environment.

The reason why impressions on the color of the print image printed on a print sheet and the color of a reproduced image displayed on the display screen are largely different from each other is considered to be that the degree of influence on the visibility of each image provided by the comparison environment is different, for example, due to a difference in color of reflection light and light amount depending on the light source, print sheet or display screen, a difference in the color of reflected light depending on the color of the wall and the color of observer' s clothes, a difference in the light amount of the light source and a difference in reflectance depending on the type of the print sheet or display screen.

In the image conversion apparatus of the present invention, the print image data which expresses the print image to be printed by the print system is converted to the display image data for the display system so that the color of the reproduced image which is reproduced by the display system and the color of the print image are seen as an identical color under the comparison environment. Consequently, a disadvantage that apparent impressions on the color of the print image actually printed and the color of the reproduced image which is reproduced on the display screen are different from each other can be reduced and the colors of the print image can be corrected at a high accuracy while verifying the reproduced image. Because the image conversion apparatus of the present invention can suppress influences on the visibility of images due to changes in the comparison environment, the reproduced images can be verified in a pseudo manner under the same comparison environment in respective steps for printing which are often carried out at mutually separated places.

It is preferable that in the image conversion apparatus according to the present invention, the print image data is image data that expresses a color of an image with the coordinate of a first color space dependent on the print system; the display image data is image data that expresses a color of an image with the coordinate of a second color space dependent on the display system; the data conversion section executes data conversion based on a first correspondence that correlates the coordinate of the first color space with the coordinate of a third color space independent of the systems, a second correspondence that correlates the coordinate of the third color space with the coordinate of the second color space and a conversion relationship that expresses conversion of the coordinate of the third color space; and the conversion adjusting section adjusts the conversion relationship.

The conversion relationship which indicates a coordinate conversion on the third color space independent of the systems is adjusted so as to acquire reproduced images easily in which the colors of the print image are reproduced at a high accuracy.

It is preferable that in the image conversion apparatus according to the present invention, the degree specification accepting section accepts a specification operation that specifies a degree of visible color difference between colors of the print image and the reproduced image generated by a plurality of kinds of environmental elements in the comparison environment in the order in which an environmental element of largest degree is accepted first.

The environmental elements are specified successively in descending order of large degrees of visible color difference between the print image and the reproduced image. Consequently, the degree of influence by the environmental element affecting the data conversion largely can be specified at a high accuracy so as to improve the color reproduction accuracy of the print image.

Further, an image conversion program storage medium according to the present invention, which stores an image conversion program executed in a computer, on the computer, the image conversion program building: an image data acquiring section that acquires print image data for a print system, the print image data indicating a print image to be printed by the print system that prints an image based on the image data; a data conversion section that converts the print image data to display image data for a display system such that the print image is reproduced by the display system that displays the image on a display screen based on the image data; a degree specification accepting section that accepts a specification operation that specifies a degree of visible color difference between colors of the print image and a reproduced image of the print image reproduced by the display system, the degree of visible color difference generated by a comparison environment that compares the colors therebetween; and a conversion adjusting section that adjusts data conversion by the data conversion section based on a degree specified by the specification operation so that the color of the print image and the color of the reproduced image are seen as an identical color under the comparison environment on a computer.

The image conversion program storage medium of the present invention can build up an image display apparatus for displaying the proof image in which the colors of the print image are reproduced at a high accuracy, on a computer.

As for the image conversion program storage medium, a basic form has been shown herein, which is merely to avoid the duplication. The image conversion program storage medium of the present invention is not restricted to the basic configuration but includes various types corresponding to the various types of the image conversion apparatuses.

As for an element like the image data acquiring section built on the computer system by the image conversion program of the present invention, one element may be built with a single program component or several elements may be built with a single program component. Further, the element may be built by executing itself, or may be built by providing instruction to other programs or program components included in the computer system.

According to the present invention, the proof image in which colors of the print image are reproduced at a high accuracy can be displayed.

### BRIEF DESCRIPTION OF THE DRAWINGS

FIG. 1 is an entire configuration diagram of a display/print system in which an embodiment of the present invention is built;
FIG. 2 is a hardware configuration diagram of a personal computer;
FIG. 3 is a conceptual diagram showing a CD-ROM;
FIG. 4 is a functional block diagram of an image display device;
FIG. 5 is a flow chart showing a flow of sequential procedure until a proof image based on a print image data is displayed; and
FIG. 6 is a view showing an example of a setting screen.

### DETAILED DESCRIPTION

Hereinafter, the embodiment of the present invention will be described with reference to the accompanying drawings.

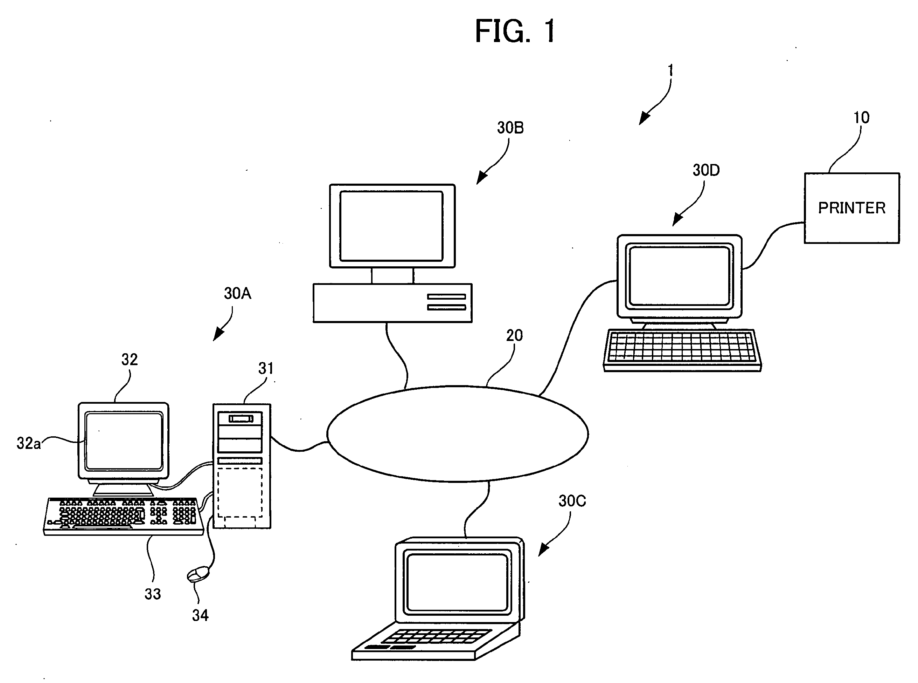

FIG. 1 is an entire configuration diagram of a display/print system in which an embodiment of the present invention is built.

A display/print system 1 is constituted of a photographing step of taking pictures of an object so as to obtain a taken picture, an edition step of editing print images by using the taken picture and a printing step of printing the edited image. FIG. 1 shows a personal computer 30B which is provided on the photographing step so as to display a proof image which reproduces a print image, a personal computer 30C which is provided on the edition step so as to display the proof image which reproduces the print image, a personal computer 30D which is provided on the printing step so as to display the proof image which reproduces the print image, a personal computer 30A which is provided on user side so as to display the proof image which reproduces the print image and a printer 10 for printing the print image. These components are connected through an Internet network 20. Actually, a color scanner for reading manuscript images and a printer for outputting images based on the image data are connected to the display/print system 1 and these components are not shown. The personal computers 30A, 30B, 30C and 30D correspond to an example of the display system of the present invention and the printer 10 corresponds to an example of the print system of the present invention.

In the photographing step, color separation image data of RGB color space obtained by reading a manuscript by using a color scanner (not shown), a color separation image data of CMYK color space created by using the personal computer and color separation data of L*a*b color space obtained by taking pictures of an object using a digital camera are input to the personal computer 30B. The input color separation data is transmitted from the personal computer 30B on the photographing step to the personal computer 30C on the editing step.

In the editing step, electronic edition based on color separation image data sent from the photographing step is carried out using the personal computer 30C by an operator so as to generate page image data which indicates pages of images to be printed. The page image data includes the color separation image data of RGB color space, color separation image data of CMYM color space and color separation image data of L*a*b* color space transmitted from the photographing step, mixedly. The generated page image data is transmitted from the personal computer 30C of the editing step to the personal computer 30D of the printing step.

In the printing step, print image data of a data style meeting the printer 10 is generated based on the page image data transmitted from the editing step. In the meantime, the printer 10 expresses colors by combination of four color inks, C, M, Y and K so as to generate print image data of CMYK color space. The generated print image data is transmitted to the personal computers 30A, 30B and 30C on the photographing step, editing step and user side before it is sent to the printer 10.

In the personal computers 30A, 30B, 30C and 30D, print image data of CMYK color space is converted to display image data of RGB color space which can be displayed on the display screens of the personal computers 30A, 30B, 30C and 30D and a proof image which reproduces the print image is displayed based on the display image data. Each user of the photographing step, editing step, printing step and customer side verifies the color of the print image preliminarily by using the proof image displayed on the personal computers 30A, 30B, 30C and 30D. If user of each step determines that the colors of the proof image does not reproduce the colors of color samples prepared preliminarily, the print image data on the printing step undergoes color correction treatment and then, based on the print image data after the color correction treatment, the proof image is displayed on each of the personal computers 30A, 30B, 30C and 30D again.

If users of all the steps verify that the colors of the proof image has reproduced the colors of the color samples, the print image data is transmitted from the personal computer 30D on the printing step to the printer 10 and the printer 10 generates the print images.

The display/print system 1 enables the colors of the print images to be verified by user of each step preliminarily. Consequently, a work for repeating test prints for adjusting the colors of the print image to target print colors can be eliminated thereby generation of processing time and waste papers can be suppressed.

In the soft proof, the color of the print image is verified by using the proof image displayed on the display screen preliminarily. When the color of the proof image displayed on the display monitor is set beside the color of the print image printed on a sheet actually by using the high calibrated display monitor, often an impression that the colors do not agree with each other apparently is made. As a reason for this, it is considered that the degree of light reflecting on the proof image and the print image at observation places where the respective personal computers 30A, 30B, 30C and 30D are installed is different. According to this embodiment, the print image data is converted to display image data for the personal computers 30A, 30B, 30C and 30D by considering influences on the color sample and proof image at an environment of the observation places where the personal computers 30A, 30B, 30C and 30C are installed. Consequently, users of the respective steps can verify the proof image that reproduces with high-accuracy the colors of the print image to be printed by the printer 10 in a pseudomanner under the same environmental condition.

Hereinafter, the personal computers 30A, 30B, 30C and 30D are collectively called as a personal computer 30 and only when each of the personal computers 30A, 30B, 30C and 30D is explained individually, an alphabet is attached after each reference numeral.

As shown in FIG. 1, the personal computer 30 includes a main body unit 31, a monitor display unit 32 for displaying images on a display screen 32a corresponding to instructions from the main body unit 31, a keyboard 33 which inputs various kinds of information to the main body unit 31 corresponding to a key operation and a mouse 34 with which user specifies an arbitrary position on the display screen 32a so as to input an instruction corresponding to an icon indicated at that position.

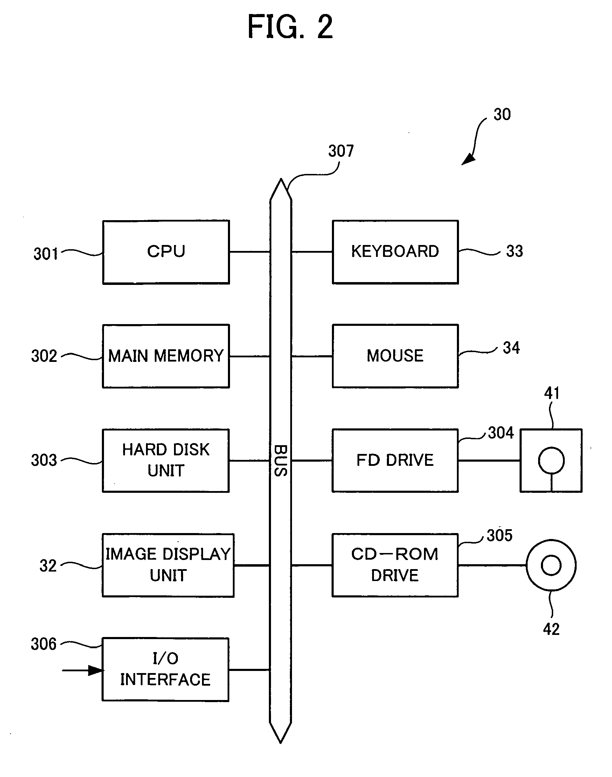

FIG. 2 is a hardware configuration diagram of the personal computer 30.

As shown in FIG. 2, the main body unit 31 of the personal computer 30 includes a CPU 301 for executing various kinds of programs, a main memory 302 in which each program stored in a hard disk unit 303 is read out and expanded to be executed by the CPU 301, a hard disk unit 303 which stores various kinds of programs and data, a FD drive 304 loading a FD 41 for accessing the FD 41, a CD-ROM drive 305 for accessing a CD-ROM 42, and an I/O interface 306 which receives image data from a control server 20 and sends various kinds of instruction data to the control server 20. These components, the monitor display unit 32, the keyboard 33, and the mouse 34, shown in FIG. 1, are connected to one another through a bus 307.

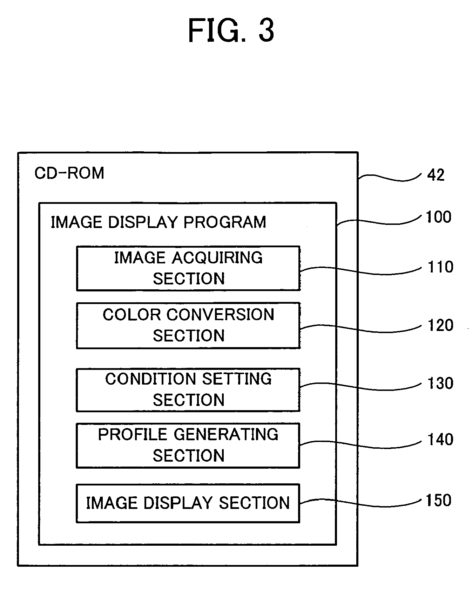

The CD-ROM 42 stores an image display program 100 (see FIG. 3) according to an embodiment of the image conversion program of the present invention.

FIG. 3 is a conceptual diagram showing the CD-ROM 42. As shown in FIG. 3, the image display program 100 stored in the CD-ROM 42 includes an image acquisition section 110, a color conversion section 120, a condition setting section 130, a profile generating section 140 and an image display section 150.

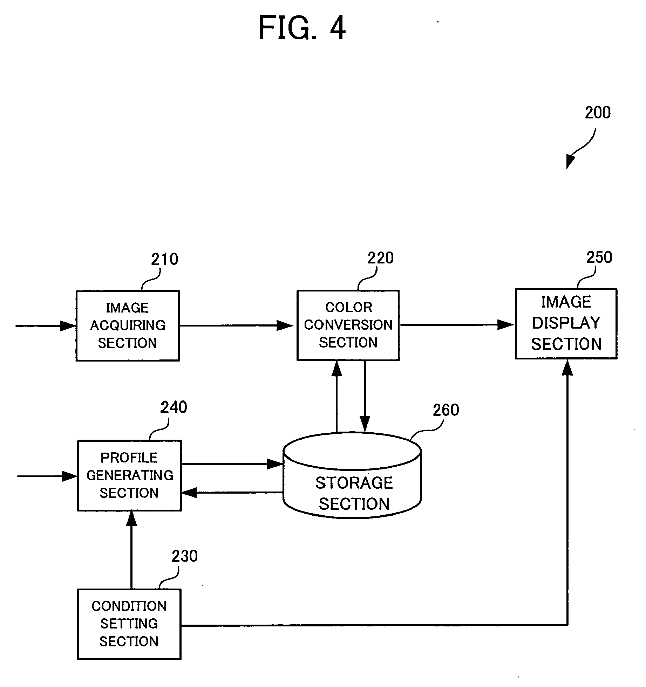

The CD-ROM 42 is loaded on a CD-ROM drive 305 of the personal computer 30 and the image display program 100 stored in the CD-ROM 42 is uploaded to the personal computer 30 and stored in the hard disk unit 303. Then, when the image display program 100 is started and executed, an image display apparatus 200 (see FIG. 4) of an embodiment of the image conversion apparatus of the present invention is built in the person computer 30.

Although as a storage medium for storing the image display program 100, the CD-ROM 42 is exemplified, the storage medium for storing the image display program 100 is not restricted to the CD-ROM but it is permissible to use other storage medium such as an optical disk, MO, FD and magnetic tape. The image display program 100 may be supplied directly to the personal computer 30 through the I/O interface 306, but not via any storage medium.

The detail of each section of the image display program 100 will be described together with the operation of each section of the image display apparatus 200.

FIG. 4 is a functional block diagram of the image display apparatus 200.

The image display apparatus 200 includes an image acquisition section 210, a color conversion section 220, a condition setting section 230, a profile generating section 240, an image display section 250 and a storage section 260.

The image acquisition section 210, the color conversion section 220, the condition setting section 230, the profile generating section 240, and the image display section 250 which constitute the image display apparatus 200, correspond to the image acquisition section 110, the color conversion section 120, the condition setting section 130, the profile generating section 140 and the image display section 150, which constitute the image display program 100 of FIG. 3, respectively.

The respective components of FIG. 4 are constituted of a combination of computer hardware and operating system (OS) and application program to be executed by the computer, and by contrast, the respective components of the image display program 100 shown in FIG. 3 are constituted of only the application program.

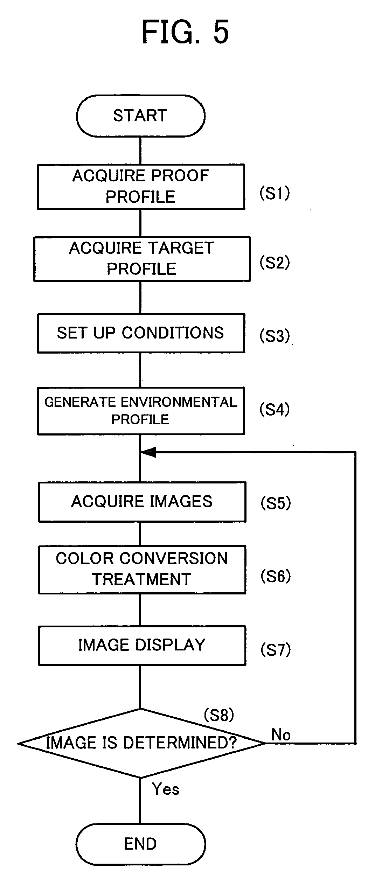

FIG. 5 is a flow chart showing a flow of a sequential procedure in the image display apparatus 200 shown in FIG. 4 until the proof image based on the print image data is displayed.

Hereinafter, the operation of the respective components of the image display apparatus 200 shown in FIG. 4 will be described with reference to the flowchart of FIG. 5 and the respective components of the image display program 100 shown in FIG. 3 will be described at the same time.

Prior to display of the proof image, the profile generating section 240 generates a proof profile (step S1 of FIG. 5) which correlates the coordinate of the display color space (RGB color space) dependent on the display screen 32a with the coordinate of a common color space (L*a*b* color space) independent of the systems. The RGB color space corresponds to an example of the second color space of the present invention and the L*a*b* color space corresponds to an example of the third color space of the present invention. The proof profile can be provided by a manufacturer of the personal computer 30 and here, a basic creation method of the proof profile will be described.

When generating the proof profile, color data, which is constituted of three colors R, G, B, is created by changing the values of R, G and B successively and a color patch image based on such a generated color data is displayed on the display screen 32a through the monitor display apparatus 32. Further, respective color patches which constitute the displayed color patch image are measured with a colorimeter so as to obtain L*, a* and b* values as colorimetric values and correlate them with the R, G, and B values. Consequently, a proof profile which indicates a correlation between the coordinate value on the color space of the RGB colors and the coordinate value on the common color space (L*a*b* color space) is built up. This proof profile is each different depending on the personal computers 30A, 30B, 30C and 30D and dependent on the respective personal computers 30A, 30B, 30C and 30D, and corresponds to an example of the second correlation of the present invention.

A print profile which correlates the coordinate of a print color space (CMYK color space) dependent on the printer 10 and the coordinate of the common color space (L*a*b* color space) independent of the systems is transmitted from the personal computer 30D on the printing step to other personal computers 30A, 30B and 30C. The print profile is transmitted to the profile generating section 240 of FIG. 4 (step S2 of FIG. 5).

The print profile is generated by the personal computer 30D on the printing step or provided by a manufacturer of the printer 10. Although it is not generated by the other personal computers 30A, 30B, or 30C, the creation method of the basic print profile will be described briefly here.

When generating the print profile, different from the proof profile, color data of CMYK four colors matching with the printer 10 is generated. The color data is generated by changing the values of C, M, Y and K successively by means of, for example, the personal computer 30D on the printing step and a color patch image based on the color data is printed with the printer 10. Further, the respective color patches which constitute a printed color patch image are measured with a colorimeter so as to obtain the L*, a* and b* values and correlate them with the C, M, Y and K values. Consequently, a print profile which indicates a correlation between the coordinate value on the color space of the CMYK four colors and the coordinate value on the common color space (L*a*b* color space) is built up. The CMYK color space corresponds to an example of the first color space of the present invention and the print profile corresponds to an example of the first correlation of the present invention.

After the print profile and the proof profile are obtained, various observation conditions such as the environment of a place where the personal computer 30 is installed and paper type of the color sample are set up (step S3 of FIG. 5). First, an instruction for displaying a setting screen for setting the observation conditions is transmitted from the condition setting section 230 to the image display section 250 and a setting screen prepared preliminarily is displayed on the display screen 32a by the image display section 250.

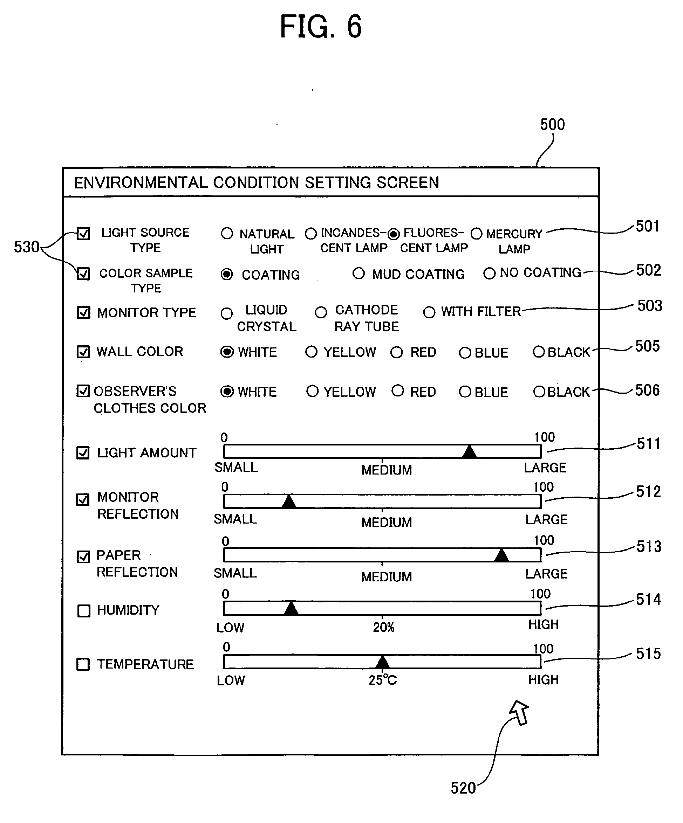

FIG. 6 is a diagram showing an example of the setting screen.

A setting screen 500 shown in FIG. 6 sets up an actual observation condition with respect to a standard environment condition (in this example, an image on a medium having a reflectance b of the surface is observed at a temperature of 25°C and a humidity of 25% under the natural light having a predetermined light amount a when the wall color and the color of clothes of an observer are white). The setting screen 500 includes a radio button setting section for selecting an observation condition from plural kinds of observation conditions and a slide setting section in which a slider is operated along a scale indicating the degree of an influence on the color of the image under each observation condition, the slide setting section being graduated from 0 to 100. The radio button setting section includes a light source type setting section 501 for setting the type of light source under the observation environment, a color sample type setting section 502 for setting the type of surface treatment of a print paper on which the color sample is printed, a monitor type setting section 503 for setting the type of the display screen 32a, a wall color setting section 505 for setting the color of a wall under the observation environment and a clothes color setting section 506 for setting the clothes color of an observer. The slide setting section includes a light amount setting bar 511 for setting the degree of reflection of light on the color sample and proof image by specifying a light amount, a monitor reflection setting bar 512 for setting the degree of reflection of light on the proof image by specifying the degree of reflection by the surface of the display screen 32a, a paper reflection setting bar 513 for setting the degree of reflection of light on the color sample by specifying the degree of reflection by the surface of the color sample, a humidity setting bar 514 for setting the degree of reflection of light on the color sample and proof image by specifying the humidity under the observation environment and a temperature setting bar 515 for setting the degree of reflection of light on the color sample and proof image by specifying a temperature under the observation environment. Each setting section and each setting bar are provided with a check box 530 for selecting whether or not each observation condition is to be set up.

The light source type setting section 501, the color sample type setting section 502, the monitor type setting section 503, the wall color setting section 505 and the clothes color setting section 506 included in the radio button setting section are used to set up the degree of influence on visibilities of the proof image and color sample indirectly by setting the light source, color sample, monitor type and the colors of the wall or the observer's clothes. The light amount setting bar 511, the monitor reflection setting bar 512, the paper reflection setting bar 513, the humidity setting bar 514 and the temperature setting bar 515 which constitute the slide setting section set the light amount of a light source, the degree of reflection of the monitor and print paper, and the degree of the humidity and temperature so as to set up the degree of light reflected by the proof image and color sample quantitatively. The light source, the color sample, the motor type, the color of the wall and clothes of an observer, the light amount of the light source, the degree of reflection by the monitor and the print paper, the humidity and the temperature are an example of the comparative environment of the present invention and an operation of user's setting the observation condition according to the setting screen 500 corresponds to an example of "specifying operation for specifying an extent of a difference in visibility between the proof image and the color sample" of the present invention.

In the slide setting section, multiple observation conditions are arranged in descending order of large degrees of reflection of light to the proof image and color sample and those observation conditions can be set successively only from the top. In the light amount setting bar 511, the center of the bar indicates the degree of reflection of light under the standard environment condition and as the operator is moved to the right, the degree of reflection of light is increased and as the bar is moved to the left, the degree of reflection of light is decreased. The light amount can be set within a range of "X±A" with respect to the degree of reflection of light X under the standard environmental condition. If the degree of reflection of light is set to "X1(X1<X)" by means of the light amount setting bar 511, the set degree of reflection "X1" is set in the center of the next monitor reflection bar 512 and the values on both ends of the monitor reflection bar 512 are set to "X1±|A - X1|/2", so that the degree of reflection of the surface of the display screen 32a is set up. Otherwise, if the degree of reflection of light at each bar is set to "Xn(Xn<X)", the set degree of reflection "Xn" is set in the center of the bar to be set next and values on both ends of the bar are set to "Xn±|A - Xn|/2".

By setting observation conditions in descending order in which an observation condition having a large degree of reflection of light on the image is set first, the observation conditions can be set with high-accuracy.

If user sets up an environment of a place where the display screen 23a is installed or type of a print paper for the color sample by moving a pointer 520 using a mouse 34 or the like using the setting screen 500, its setting content is transmitted from the condition setting section 230 to the profile generating section 240. The condition setting section 230 corresponds to an example of a degree specification accepting section of the present invention.

The profile generating section 240 generates an environment condition function so as to convert the coordinate on the L*a*b* color space which is a common color space independent of the systems to the coordinate on a new L*a*b* color space corresponding to the setting content. This environmental condition function is a function which corrects the observation environmental condition set by the condition setting section 230 to a standard environmental condition (in this example, an image on a medium having a reflectance b of the surface is observed at a temperature of 25°C and a humidity of 25% under the natural light having a predetermined light amount a when the wall color and the color of clothes of an observer are white) in a pseudo manner. As an initial function, an equivalent conversion function for converting a coordinate value on the L*a*b* color space to a coordinate value on the same L*a*b* color space is generated.

If "natural light" is set up in the light source type setting section 501 shown FIG. 6, the environmental condition function is not changed and if an "incandescent lamp" is set up, the environmental condition function is changed so that it suppresses the red component of the original color, increasing the blue component and the green component. If "fluorescent lamp" is set up, the environmental condition function is changed to increase the red component of the original color. If "mercury lamp" is set up, the environmental condition function is changed to increase the red component of the original color largely.

If "coating" is set up in the color sample type setting section 502, the environmental condition function is changed to decrease the brightness of the original color. If "mud coating" is set up, the environmental condition function is not changed and if "no-coating" is set up, the environmental condition function is changed to increase the brightness of the original color.

In the monitor type setting section 503, if "liquid crystal" is set up, the environmental condition function is changed to reduce the brightness of the original color and if "cathode ray tube" is set up, the environmental condition function is changed to increase the brightness of the original color. If "existence of filter" is set up, the environmental condition function is not changed.

In the wall color setting section 505 and the observer clothes color setting section 506, if "white" is set up, the environmental condition function is not changed and if "yellow" is set up, the environmental condition function is changed to reduce the yellow component of the original color. If "red" is set up, the environmental condition function is changed to reduce the red component of the original color. If "blue" is set up, the environmental condition function is changed to reduce the blue component of the original color. If "black" is set up, the environmental condition function is changed to reduce the black component of the original color.

Using the light amount setting bar 511, the monitor reflection setting bar 512, the paper reflection setting bar 513, the humidity setting bar 514 and the temperature setting bar 511, the light amount of the light source, the degree of reflection of the monitor, the degree of reflection of print paper, the humidity and the temperature are set up in succession. If the degree of reflection of light to the images is set to "Y = degree of reflection of light under the standard environmental condition X±B" finally, the environmental condition function is changed so that the degree of reflection Y approaches the degree of reflection under the standard environmental condition X.

The environmental condition function is calculated as described above.

Subsequently, in the proof profile obtained preliminarily (correspondence between the coordinate value on the RGB color space and the coordinate value on the L*a*b* color space), the profile generating section 240 converts each coordinate value on the L*a*b* color space correlated with each coordinate value on the RGB color space to each coordinate value on the L*a*b* color space according to the calculated environmental condition function. Subsequently, in the print profile (correspondence between the coordinate value on the CMYK color space and the coordinate value on the L*a*b* color space), the coordinate value on the CMYK color space correlated with each coordinate value on the L*a*b* color space after conversion is acquired and each coordinate value on the CMYK color space is correlated with each coordinate value on the RGB color space so as to generate an environmental profile.

This environmental profile converts the coordinate value on the CMYK color space to the coordinate on the RGB color space by suppressing influence on visibility under an observation condition, so that a color indicated by the coordinate value on the color sample is reproduced on the display screen 32a at a high accuracy and corresponds to an example of the third correspondence of the present invention. The generated environmental profile is stored in a storage section 260.

If print image data is generated in the personal computer 30D on the printing step shown in FIG. 1, the print image data is transmitted to the personal computers 30A, 30B and 30C on the respective steps.

The print image data transmitted to the personal computers 30A, 30B and 30C is acquired by an image acquiring section 210 shown in FIG. 4 (step S5 of FIG. 5). The image acquiring section 210 corresponds to an example of the image data acquiring section of the present invention. The acquired print image data is transmitted to a color conversion section 220.

In the color conversion section 220, the print image data of the CMYK color space is converted to the display image data of the RGB color space by using the environmental profile stored in the storage section 260 (step S6 of FIG. 5). By using the environmental profile, the image data of the CMYK color space is converted to the image data of the RGB color space and at the same time, the print image data is converted to the display image data so that the color of the color sample printed on a print sheet and the color of the proof image displayed on the display screen are seen as an identical color under an identical observation condition. The color conversion section 220 corresponds to an example of the data conversion section of the present invention. Further, the profile generating section 240 adjusts the color conversion at the color conversion section 220 by generating the environmental profile and corresponds to an example of the conversion adjusting section of the present invention. The generated display image data is transmitted to the image display section 250.

The image display section 250 displays the proof image on the display screen 32a shown in FIG. 1 based on the display image data (step S7 of FIG. 5).

A user of the personal computer 30 verifies whether or not the color of the proof image displayed on the display screen 32a has reproduced the color of the color sample with the eyes. If the user determines that the color of the proof image has not reproduced the color of the color sample at a high accuracy or the user desires to change the color of the proof image (step S8 of FIG. 5: No), the user notifies users of each of photographing step, editing step and printing step of color correction instruction. The users of the photographing step, editing step and printing step verify the proof image displayed on the personal computers 30B, 30C and 30D installed on each step and execute color correction treatment on the color separation image data of the photographing step, the page data of the editing step and the print image data of the printing step using the personal computers 30B, 30C and 30D. The print image data after the color correction treatment is transmitted to the respective personal computers 30A, 30B, 30C and 30D again.

In the personal computer 30, the image acquiring section 210 shown in FIG. 4 acquires the print image data (step S5 of FIG. 5) and the print image data is converted to the display image data by the color conversion section 220 (step S6 of FIG. 5). The proof image represented by the display image data is displayed by the image display section 250 (step S7 of FIG. 5) so as to compare the color of the proof image with the color of the color sample.

A series of processings of executing color correction treatment on the print image data to acquire a new print image data (step S5 of FIG. 5), converting the print image data to the display image data (step S6 of FIG. 5), displaying the proof image represented by the display image data (step S7 of FIG. 5) and comparing the color of the color sample with the color of the proof image are repeated by users of all the steps until it is verified that the colors of the proof image have reproduced the colors of the color sample (step S8 of FIG. 5).

The print image data determined finally is transmitted to the printer 10 so as to generate the print images.

According to this embodiment, the users of the respective steps can verify the proof image in which the colors of the print image to be printed by the printer 10 are reproduced at a high accuracy preliminarily so as to suppress generation of waste paper in a pseudo manner under the same environmental condition.

According to this embodiment, a difference in observation environment is expressed by a simple environmental condition function, thereby suppressing an increase of data size of the environmental profile and therefore, this embodiment can be applied to the printer system, actually.

Although the print system which expresses the colors of images with CMYK four color inks have been described above, the print system of the present invention may be a system which expresses the colors of images with four or more color inks including special colors and the CMYK.

Although the display system which expresses the colors of images by a combination of RGB three colors has been described, the display system of the present invention may be a system which expresses the colors of images with the L*, a* and b*, not the RGB.

In the above description, an example of setting the degree of reflection of light depending on such factors as the light source, the type of paper of the color sample, wall color, color of observer's clothes, light amount, monitor reflectance, reflectance of paper of the color sample, humidity and temperature has been described. The degree specification accepting section of the present invention may be any factor which specifies different elements in the degree of influences on the visibilities of the color sample and the proof image, such as the color of the color sample, ink type, creation accuracy of the proof profile or print profile, calibration accuracy of the display screen, color reproduction accuracy of the display screen, changes with a time passage of the print paper and ink, changes with a time passage of the display screen, unevenness of light amount in a plane of the display screen, surface angle of the display screen, startup repetition reproducibility of the display screen, changes with a time passage of a viewer for displaying the proof image, repetition reproducibility by brightness adjustment of the viewer, and a difference of type of the viewer.

Although an example that "the color separation image data to be input from a digital camera", "color patch measured value", and "the coordinate of a common color space (third color space of the present invention) independent of the systems in a profile generated by the profile generating section 240" is expressed with the L*a*b* color space has been described, the color space in which these are expressed may be a color space independent of the device, for example, Luv color space or XYZ color space.

## Claims

1. An image conversion apparatus comprising:
an image data acquiring section that acquires print image data for a print system, the print image data indicating a print image to be printed by the print system that prints an image based on image data;
a data conversion section that converts the print image data to display image data for a display system such that the print image is reproduced by the display system that displays the image on a display screen based on the image data;
a degree specification accepting section that accepts a specification operation that specifies a degree of visible color difference between colors of the print image and a reproduced image of the print image reproduced by the display system, the degree of visible color difference generated by a comparison environment that compares the colors therebetween; and
a conversion adjusting section that adjusts data conversion by the data conversion section based on a degree specified by the specification operation so that the color of the print image and the color of the reproduced image are seen as an identical color in the comparison environment.

2. The image conversion apparatus according to claim 1, wherein
the print image data is image data that expresses a color of an image with the coordinate of a first color space dependent on the print system,
the display image data is image data that expresses a color of an image with the coordinate of a second color space dependent on the display system,
the data conversion section executes data conversion based on a first correspondence that correlates the coordinate of the first color space with the coordinate of a third color space independent of the systems, a second correspondence that correlates the coordinate of the third color space with the coordinate of the second color space and a conversion relationship that expresses conversion of the coordinate of the third color space, and
the conversion adjusting section adjusts the conversion relationship.

3. The image conversion apparatus according to claim 1, wherein the degree specification accepting section accepts a specification operation that specifies a degree of visible color difference between colors of the print image and the reproduced image generated by a plurality of kinds of environmental elements in the comparison environment in the order in which an environmental element of largest degree is accepted first.

4. An image conversion program storage medium that stores an image conversion program executed in a computer, on the computer, the image conversion program building:
an image data acquiring section that acquires print image data for a print system, the print image data indicating a print image to be printed by the print system that prints an image based on image data;
a data conversion section that converts the print image data to display image data for a display system such that the print image is reproduced by the display system that displays the image on a display screen based on the image data;
a degree specification accepting section that accepts a specification operation that specifies a degree of visible color difference between colors of the print image and a reproduced image of the print image reproduced by the display system, the degree of visible color difference generated by a comparison environment that compares the colors therebetween; and
a conversion adjusting section that adjusts data conversion by the data conversion section based on a degree specified by the specification operation so that the color of the print image and the color of the reproduced image are seen as an identical color under the comparison environment on a computer.

5. The image conversion program storage medium according to claim 4, wherein
the print image data is image data that expresses a color of an image with the coordinate of a first color space dependent on the print system,
the display image data is image data that expresses a color of an image with the coordinate of a second color space dependent on the display system,
the data conversion section executes data conversion based on a first correspondence that correlates the coordinate of the first color space with the coordinate of a third color space independent of the systems, a second correspondence that correlates the coordinate of the third color space with the coordinate of the second color space and a conversion relationship that expresses conversion of the coordinate of the third color space, and
the conversion adjusting section adjusts the conversion relationship.

6. The image conversion program storage medium according to claim 4, wherein the degree specification accepting section accepts a specification operation that specifies a degree of visible color difference between colors of the print image and the reproduced image generated by a plurality of kinds of environmental elements in the comparison environment in the order in which an environmental element of largest degree is accepted first.

7. An image conversion method comprising the steps of:
acquiring print image data for a print system, the print image data indicating a print image to be printed by the print system that prints an image based on image data;
converting the print image data to display image data for a display system such that the print image is reproduced by the display system that displays the image on a display screen based on the image data;
accepting a specification operation that specifies a degree of visible color difference between colors of the print image and a reproduced image of the print image reproduced by the display system, the degree of visible color difference generated by a comparison environment that compares the colors therebetween; and
adj usting data conversion by the data conversion section based on a degree specified by the specification operation so that the color of the print image and the color of the reproduced image are seen as an identical color in the comparison environment.

8. The image conversion method according to claim 7, wherein
the print image data is image data that expresses a color of an image with the coordinate of a first color space dependent on the print system,
the display image data is image data that expresses a color of an image with the coordinate of a second color space dependent on the display system,
the step of converting is a step of executing data conversion based on a first correspondence that correlates the coordinate of the first color space with the coordinate of a third color space independent of the systems, a second correspondence that correlates the coordinate of the third color space with the coordinate of the second color space and a conversion relationship that expresses conversion of the coordinate of the third color space, and
the step of adjusting is a step of adjusting the conversion relationship.

9. The image conversion method according to claim 7, wherein the step of accepting is a step of accepting a specification operation that specifies a degree of visible color difference between colors of the print image and the reproduced image generated by a plurality of kinds of environmental elements in the comparison environment in the order in which an environmental element of largest degree is accepted first.

10. An image display system comprising:
an image data acquiring section that acquires print image data for printing, the print image data indicating a print image to be printed by the printing in which an image is printed based on image data;
a display section that displays an image on a display screen based on the image data;
a data conversion section that converts the print image data to display image data for the display section such that the print image is reproduced on the display screen;
a degree specification accepting section that accepts a specification operation that specifies a degree of visible color difference between colors of the print image and a reproduced image of the print image reproduced on the display screen, the degree of visible color difference generated by a comparison environment that compares the colors therebetween; and
a conversion adjusting section that adjusts data conversion by the data conversion section based on a degree specified by the specification operation so that the color of the print image and the color of the reproduced image are seen as an identical color in the comparison environment.

11. The image display system according to claim 10, wherein
the print image data is image data that expresses a color of an image with the coordinate of a first color space dependent on the print system,
the display image data is image data that expresses a color of an image with the coordinate of a second color space dependent on the display system,
the data conversion section executes data conversion based on a first correspondence that correlates the coordinate of the first color space with the coordinate of a third color space independent of the systems, a second correspondence that correlates the coordinate of the third color space with the coordinate of the second color space and a conversion relationship that expresses conversion of the coordinate of the third color space, and
the conversion adj usting section adj usts the conversion relationship.

12. The image display system according to claim 10, wherein the degree specification accepting section accepts a specification operation that specifies a degree of visible color difference between colors of the print image and the reproduced image generated by a plurality of kinds of environmental elements in the comparison environment in the order in which an environmental element of largest degree is accepted first.
